# EUROPEAN PATENT APPLICATION

(11) **EP 3 859 931 A1**
(43) Date of publication of application: **04.08.2021**
(21) Application number: 20154291.7
(22) Date of filing: 29.01.2020
(51) Int. Cl.: H02J 3/32, B60L 53/31, B60L 53/63, B60L 53/67, H02J 13/00, B60L 53/10, B60L 53/66, H02J 7/00

(54) **A METHOD AND A SYSTEM FOR DISTRIBUTION OF POWER**

(71) Applicant: E.ON Sverige AB, 205 09 Malmö (SE)
(72) Inventor: ROSÉN, Per, 227 33 Lund (SE); SKOGSTRÖM, Jacob, 234 42 Lomma (SE); ROSENQVIST, Fredrik, 254 51 Helsingborg (SE); LINDOFF, Bengt, 237 35 Bjärred (SE); CARLSTRÖM, Helen, 237 36 Bjärred (SE); MEJVIK, Jacob, 222 41 Lund (SE); BACKE, John, 217 55 Malmö (SE)
(74) Representative: AWA Sweden AB

(57) **Abstract**

A method (1000) for distribution of power in an electric grid (100) is provided The electric grid comprises at least one charging device (200). The method comprises determining (1200) that a first load level is above a predetermined threshold. Further, the method comprises transmitting (1400) a first message to the at least one charging device. The first message indicates that the load level is above the predetermined threshold. Furthermore, the method comprises reducing (1600) an output power level of the at least one charging device for a time period based on said first message.

## Description

### TECHNICAL FIELD

The present invention is related to the field of power distribution.

### BACKGROUND

A big, and growing, problem within the field of power distribution is the problem of grid capacity shortage. The problem is particularly prevalent in expansive regions. However, it is likely that the problem will spread further as urbanization and technological advancements continues.

Further, the transport sector is currently in a transition towards electric vehicles which comprises batteries that need to be charged regularly. The introduction of additional electric vehicles will put further strain on the electric grids, thereby amplifying the risk of capacity shortage. Current projections indicate a quick and extensive transition to an electrically powered transport fleet. However, it is hard to predict the grid capacity with regards to electrical vehicles, since they may connect to the grid at any time and at many different places.

Hence, it is of great interest to investigate, and solve, the problems related to grid capacity shortages.

### SUMMARY

In view of the above discussion, a concern of the present invention is to provide methods and systems which may remove bottlenecks and/or capacity shortages within an electric grid. Further, the methods and systems may detect that a bottleneck and/or capacity shortage is imminent. Additionally, the methods and systems may be performed in a decentralized fashion. Furthermore, the methods and systems may perform the aforementioned without sharing any information with regards to where bottlenecks and/or capacity shortages reside within the electric grid. Hence, the security may be enhanced.

To address at least one of these concerns and other concerns, a method and a system for distribution of power, in accordance with the independent claims are provided. Preferred embodiments are defined by the dependent claims.

According to a first aspect of the present invention, a method for distribution of power in an electric grid is provided. The electric grid comprises at least one charging device. The method comprises determining that a first load level in the electric grid is above a predetermined threshold. Further, the method comprises transmitting a first message to the at least one charging device. The first message indicates that said load level is above said predetermined threshold. Furthermore, the method comprises reducing an output power level of the at least one charging device for a time period based on said first message.

According to a second aspect of the present invention, a system for distribution of power is provided. The system comprises an electric grid. The electric grid comprises at least one charging device. The system is configured to determine that a first load level in the electric grid is above a predetermined threshold and to transmit a first message to the at least one charging device. Further, the at least one charging device is configured to reduce its output power level for a time period based on said first message.

Thus, the first and second aspects of the present inventive concept are based on the common concept or idea of determining that a first load level is above a predetermined threshold, and transmitting a first message to the at least one charging device, wherein the at least one charging device is configured to reduce its output power level for a time period based on said first message.

By the term "charging device", it is meant a device configured for charging an electrical storage device or a load, such as a battery. Further, by the term "load level", it is meant the electrical power consumed by the grid and/or or the electrical components connected to the grid at a given moment. The term "message" may be understood as any analog and/or digital communicative information. By way of example, in a very simple form the message may be a static signal, e.g. a 0-5 volt signal where the voltage level comprises the message information (i.e. a 0 volt signal has a first meaning to the recipient and a 5 volt signal has a different meaning to the recipient). The message may have a more complex form, e.g. in the form of a data frame/packet as used in packet switched systems (e.g. an UDP packet). By the term "output power level", it is meant the electrical power consumed by the at least one charging device, i.e. the power provided to a battery connected to the charging device in order to charge the battery.

Hence, an advantage of the present inventive concept is for example that the power in the electric grid may be distributed more efficiently by reducing the output power level of at least one charging device. Thereby, there may not be any need to know where the bottleneck and/or capacity shortage resides within the electric grid, which may increase the security of the inventive concept, since that information may be sensitive. Further, the inventive concept may allow for the reduction in output power to be spread out in a stochastic manner, which may distribute the output power level evenly within the electric grid, which may increase the stability of the systems and/or methods. Additionally, the inventive concept is adaptable, and may be used for a growing or changing electric grid, which may be more efficient.

According to an embodiment of the present invention, the time period may be a random time period. The at least one charging device may calculate the random time period upon receipt of the message.

By the term "random time period", it is meant a stochastically determined period of time. It is to be understood that by "stochastically determined", it is further meant stochastically or randomly determined or chosen, wherein the determined period of time may be stochastically or randomly determined or chosen from an interval. Hence, the stochastic properties of the inventive concept may be enhanced. Enhancing the stochastic properties may increase the degree of distribution of power in the electric grid, which may make the reduction of output power level (and subsequent return to higher/normal power level) smoother, which may increase the stability and efficiency of the electric grid of the method(s) of the inventive concept.

According to an embodiment of the present invention, the output power level of the at least one charging device may be reduced by an amount determined by the at least one charging device.

Hence, the output power level of the at least one charging device may be reduced by an amount determined by the at least charging device, based on the first message. Thereby, the first message may be of a smaller size. Therefore, the efficiency, the security and/or the dependability of the method(s) of the inventive concept may be increased. Additionally, messages of small sizes will lower the bandwidth requirements put on the communication network used for transmitting the messages. This may further facilitate transmission of the messages over a non-dedicated communication network, e.g. the power network providing power to the charging devices.

According to an embodiment of the present invention, the method may further comprise, subsequent to determining that the first load level is above a predetermined threshold, determining that a second load level is above the predetermined threshold. Further, the method may comprise transmitting a second message to the at least one charging device. The second message may indicate that the load level is above the predetermined threshold. Furthermore, the method may comprise reducing the output power level of the at least one charging device for a time period based on said second message.

Therefore, the output power level may be reduced iteratively. Reducing the output power levels in subsequent steps may minimize fluctuations in the electric grid, which may increase the efficiency and/or the stability of the method(s) of the inventive concept.

According to an embodiment of the present invention, the reduction in output power level based on the second message may be different from the reduction in output power level based on the first message. In other words, the reduction in output power level based on the second message may be higher or lower than the reduction in output power level based on the first message.

A reduction of the output power levels by small amounts may facilitate the maintaining of an as high as possible output power level for the at least one charging device, which may reduce the time needed to charge a battery, thereby increasing the efficiency of the charging. However, a reduction of the power levels by larger amounts may alleviate the bottleneck(s) and/or the capacity shortage(s) more efficiently, thereby increasing the efficiency of the method(s) of the inventive concept. Hence, the method(s) of the inventive concept may adapt in response to the needs of the electric grid, based on the second message. Hence, the controllability of the inventive concept may be increased.

According to an embodiment of the present invention, the time period based on the second message may be different from the time period based on the first message. In other words, the time period based on the second message may be longer or shorter than the time period based on the first message.

In other words, a time period with reduced output power level for the at least one charging device may be lengthened or shortened. Hence, the method(s) of the inventive concept may alleviate the bottleneck(s) and/or the capacity shortage(s) more efficiently, and/or reduce the time needed to charge. Therefore, the efficiency of the method(s) of the inventive concept may be increased.

According to an embodiment of the present invention, the at least one charging device may be associated with a priority value. At least one of the reduction in output power level and the time period of the at least one charging device may be based on the priority value.

By the term "priority value", it is meant a parameter, an indication, and/or a level, which may be indicative of the need for output power (e.g. a priority value of 1 means that the need for output power is higher compared to a priority value of e.g. 5 or 10). Thereby, the reduction in output power and/or the time period of a reduction in output power may be optimized, based on the priority value. Therefore, the bottleneck(s) and/or the capacity shortage(s) may be alleviated earlier, thereby increasing the efficiency of the method(s) of the inventive concept.

According to an embodiment of the present invention, the priority value may be based on a load connected to the at least one charging device.

By the term "load", it is meant a device configured for electrical storage, such as a battery, or a device comprising a device configured for electrical storage, wherein said device may be configured to be connected to the at least one charging device.

Thereby, the reduction in output power and the time period of a reduction in output power may be higher or lower for at least one charging device, based on the priority, which may be based on a load connected to the at least one charging device. Hence, the bottleneck(s) and/or the capacity shortage(s) may be alleviated earlier, thereby increasing the efficiency of the method(s) of the inventive concept.

In a non-limiting example, the load may be a battery located in an ambulance powered by electrical motors. Since it is important that the battery in an ambulance is charged quickly, a charging device will receive an indication from the ambulance, wherein the priority value of the charging device will be set to an appropriate value (e.g. 1 as disclosed above).

According to an embodiment of the present invention, the at least one charging device may be further configured to calculate the time period as a random time period upon receipt of said message, wherein the time period may be the random time period.

Hence, the stability and efficiency of the electric grid of the system(s) of the inventive concept may be increased as disclosed above.

According to an embodiment of the present invention, the at least one charging device may be further configured to determine an amount of reduction of the output power level.

Hence, the efficiency, the security and/or the dependability of the system(s) of the inventive concept may be increased as disclosed above.

According to an embodiment of the present invention, the at least one charging device may be associated with a priority value. The at least one charging device may be further configured to determine at least one of the reduction in output power level and the time period based on the priority value.

Hence, the bottleneck(s) and/or the capacity shortage(s) may be alleviated earlier, thereby increasing the efficiency of the systems(s) of the inventive concept as disclosed above.

According to an embodiment of the present invention, the priority value may be based on a load connected to the charging device.

Hence, the bottleneck(s) and/or the capacity shortage(s) may be alleviated earlier, thereby increasing the efficiency of the systems(s) of the inventive concept as disclosed above.

According to an embodiment of the present invention, the electric grid may further comprise a grid module. The grid module may be configured to determine that the first load level is above the predetermined threshold.

By the term "grid module", it is meant a device configured to connect to the electric grid and/or the charging device(s). A system comprising at least one grid module may determine that the first load level is above the predetermined threshold faster and/or with more precision. Thereby, the efficiency of the system(s) of the present invention may be increased.

According to an embodiment of the present invention, the grid module may be configured to transmit the first message to the at least one charging device.

The system comprising at least one grid module may transmit the first message more quickly than a system not comprising a gird module. Thereby, the efficiency of the system(s) of the present invention may be increased.

Further objectives of, features of, and advantages with, the present invention will become apparent when studying the following detailed disclosure, the drawings and the appended claims. Those skilled in the art will realize that different features of the present invention can be combined to create embodiments other than those described in the following.

### BRIEF DESCRIPTION OF THE DRAWINGS

Exemplifying embodiments of the invention will be described below with reference to the accompanying drawings.
Fig. 1 is a flow chart view of a method for distribution of power in an electric grid according to an exemplifying embodiment of the present invention.
Figs. 2-5 are schematic views of a system for distribution of power comprising an electric grid according to exemplifying embodiments of the present invention.

### DETAILED DESCRIPTION

The present invention will now be described hereinafter with reference to the accompanying drawings, in which exemplifying embodiments of the present invention are shown. The present invention may, however, be embodied in many different forms and should not be construed as limited to the embodiments of the present invention set forth herein; rather, these embodiments of the present invention are provided by way of example so that this disclosure will convey the scope of the invention to those skilled in the art. In the drawings, identical reference numerals denote the same or similar components having a same or similar function, unless specifically stated otherwise.

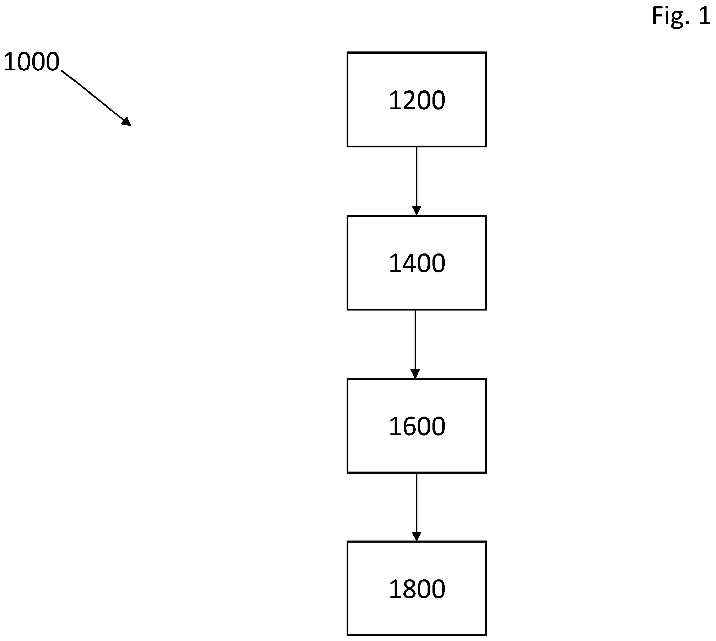

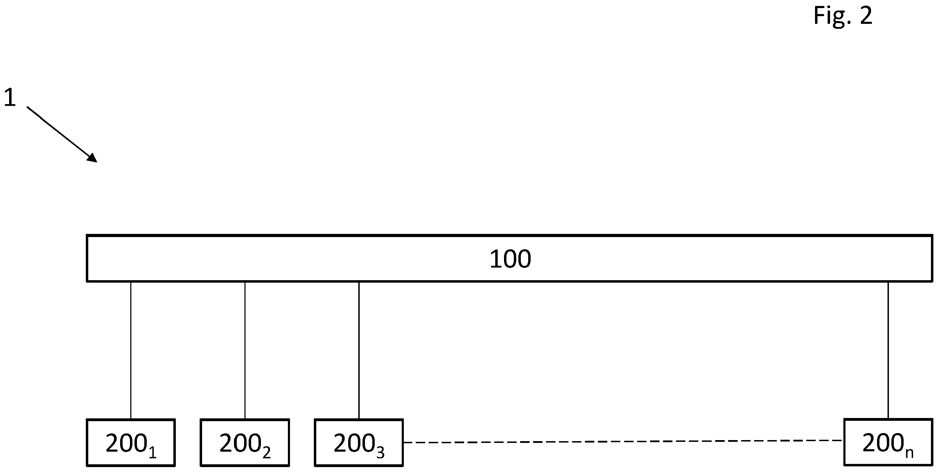

Fig. 1 shows a flow chart view of a method 1000 for distribution of power in an electric grid 100 (not shown; see Figs. 2-5), comprising at least one charging device 200 (not shown; see Figs. 2-5). The shown method 1000 comprises the steps of determining 1200 that a first load level is above a predetermined threshold, and transmitting 1400 a first message to the at least one charging device, wherein said first message indicating that said load level is above said predetermined threshold, and reducing 1600 an output power level of the at least one charging device for a time period based on said first message.

It should be noted that the inventive concept may comprise a plurality of charging devices 200. The number of charging devices 200 may increase or decrease, which may occur when a charging device 200 is connected or disconnected to the electric grid 100. The first load level increasing above the predetermined threshold may for example be caused by a previously disconnected charging device 200 being connected to the electric grid 100, or by a charging device 200 increasing its output level. The first message may be transmitted 1400 by the electric grid 100 and/or the charging device(s) 200. The first message may be forwarded from a charging device 200 to another charging device 200. The first message may be sent by power line communication. The at least one charging device 200 may be communicatively coupled to the electric grid 100. The first message may be configured to be of minimal size.

The step of determining 1200 may comprise determining 1200 a first load level and/or a difference between a first load level and a predetermined threshold. Additionally, the first message may indicate the first load level and/or the difference between a first load level and a predetermined threshold.

The time period may be a random time period. Further, the at least one charging device 200 may calculate the random time period upon receipt of the message.

The first message may comprise the random time period. The inventive concept may comprise transmitting 1400 a respective first message to each charging device 200. Thereby, each charging device 200 may receive a respective random time period.

The inventive concept may comprise transmitting 1400 a respective first message to the one or more charging device(s) 200, wherein the one or more charging device(s) 200 may calculate the random time period upon receipt of the message. Therefore, the message may be kept to a minimal size. The message may be kept to a smaller size due to the fact that message may not need to contain any information regarding the time period and/or an amount of reduction of the output power level . Hence, the message may be viewed as an alert or an indication. Keeping the message to a smaller size, may decrease the bandwidth requirement of the communication path.

The output power level of the at least one charging device 200 may be reduced 1600 by an amount determined by the at least charging device 200.

The one or more charging device(s) 200 may have different possibilities of reducing 1600 their respective output power level. If the reduced output power level is determined by the one or more charging device(s) 200, the reduction 1600 of output power level within the electric grid 100 may be caused by the charging device 200 with the lowest power need and/or priority value.

The shown flow chart further comprises, subsequent to determining 1200 that the first load level is above a predetermined threshold, the step of determining 1800 that a second load level is above the predetermined threshold. It should be noted that the shown embodiment is exemplary, and that the inventive concept is not limited to including the step of determining 1800 that a second load level is above the predetermined threshold.

Further, the step of determining 1800 that a second load level is above the predetermined threshold may be performed until a second level is equal to or below the predetermined threshold. In other words, the method 1000 may be performed iteratively until a load level is determined to be equal to or below a predetermined threshold. The inventive concept should be seen to comprise reducing the one or more output power level(s) in a stepwise fashion, wherein the one or more output power level(s) is stepwise reduced until a load level is determined to be equal to or below the predetermined threshold.

The reduction in output power level based on the second message may be different from the reduction in output power level based on the first message. Hence, the method 1000 may be performed iteratively, with differing reduction levels, until a load level is determined to be equal to or below a predetermined threshold. The reduction in output power level may be chosen to increase the smoothness and/or the speed of the method. For example, the reduction in output power level based on the second message may be double or half of the reduction in output power level based on the first message. Furthermore, a subsequent third reduction in output power level based on a further message (corresponding to the second message disclosed above) may be double or half of the reduction in output power level based on the second message.

The time period based on the second message may be different from the time period based on the first message. Thereby, the time period between determining load levels may be different.

The at least one charging device 200 may be associated with a priority value. The at least one of the reduction in output power level and the time period of the at least one charging device 200 may be based on the priority value. Further, the priority value may be based on a load connected to the at least one charging device 200. The message sent from the grid may itself indicate a priority value such that devices with a priority value above the transmitted priority value can disregard the message. Charging devices with a lower priority value will reduce their output power level in response to the message as disclosed above. The priority value associated with a charging device may be used by the charging device to determine if and to what extent the charging device will react to the message from the grid. In a non-limiting example, a device with a high priority, such as the charger for ambulance disclosed above, may disregard a number of messages from the grid before starting to reduce its output power. The number of messages to disregard may be predetermined based on the priority and/or randomly selected by the charging device such that a mean value of the number of messages to disregard is higher when the charging device has a higher priority.

Fig. 2 schematically shows a system 1 for distribution of power according to an exemplifying embodiment of the present invention. The shown system 1 comprises an electric grid 100. Further, the electric grid 100 is shown to comprise n charging devices 200. The shown electric grid 100 may be configured to determine that a first load level is above a predetermined threshold and to transmit a first message to the charging devices. Each one of the charging device(s) may be configured to reduce its output power level for a time period based on said first message.

The one or more charging device(s) 200 may be configured to calculate said time period as a random time period upon receipt of said message, and wherein said time period is said random time period. Further, the one or more charging device(s) 200 may be further configured to determine an amount of reduction of the output power level. However, the first message may comprise the random time period and/or the amount of reduction of the output power level.

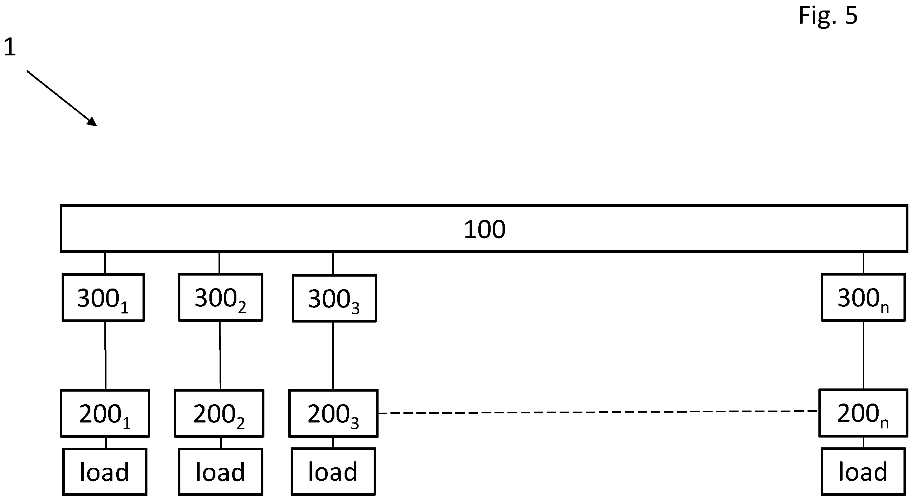

The at least one charging device 200 may be associated with a priority value. The at least one charging device 200 may be further configured to determine at least one of the reduction in output power level and the time period based on the priority value. However, the electric grid 100 and/or the one or more charging device(s) 200 may be configured to determine the reduction in output power level and/or the time period based on the priority value. The priority value may be stored in a control center, a central server, the electric grid 100 and/or the charging device(s) 200 for subsequent transmission to the charging devices. Further, the priority value may be transmitted between the electric grid 100 and the charging device(s) 200. The priority value may be based on a load connected to the charging device 200. Further, there may be more than one load(s) (not shown; see Fig. 5) connected to the charging device 200. The priority value may be based on the one or more load(s) connected to charging device 200.

The priority value for the charging device may be set in the charging device upon manufacture of the charging device. Alternatively or additionally the priority value may be set in the charging device upon deployment of the charging device. Alternatively or additionally the priority value for the charging device may be assigned after deployment of the charging device by e.g. a service technician. The assignment of the priority value may be done locally at the charging device (e.g. using a configuration interface in the charging device, DIP switches, or the like), or remotely from a central location (e.g. a control center).

As mentioned above, the priority value may be based on the one or more loads, e.g. the load forming the base for the priority value may be a battery located in an ambulance powered by electrical motors. When the ambulance connects to the electrical charger for charging the battery, the ambulance transmits a message to the charger indicating its priority. The charger then updates its priority accordingly and starts charging the battery. The message may comprise the priority value itself, an identification of the ambulance, verification data for the ambulance (e.g. a digital certificate validating the identity of the ambulance), an indication of the capacity of the battery, etc. By this arrangement, the charging device does not have to be adapted to receive any further messages from the electrical grid besides the message indicating that the load level is above the predetermined threshold (i.e. there is no need to send configuration data to the charging device). Alternatively or additionally, when the ambulance connects to the charging device the ambulance transmits a message indicating its priority to a central server connected to the electrical grid. The central server may then send a priority value to the charging device via the electrical grid or an external network. By this arrangement, the communication from the central server to the charging device only need to be one way.

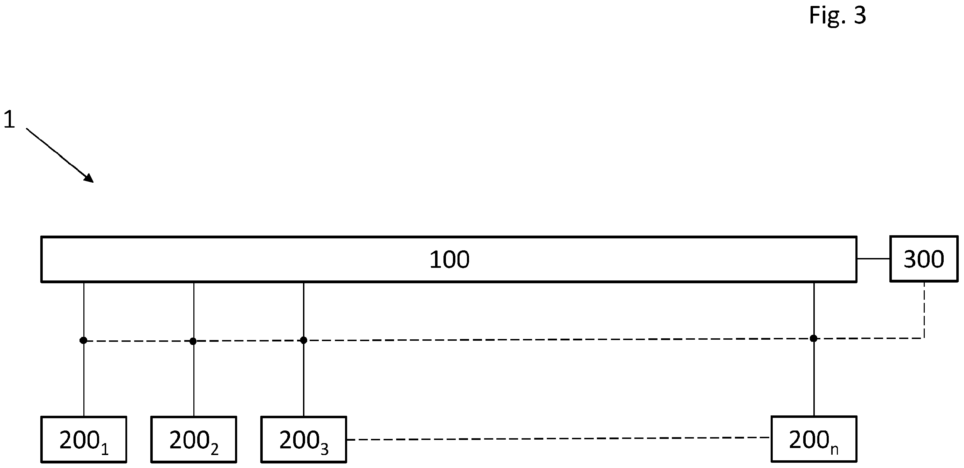

Fig. 3 schematically shows a system 1 for distribution of power according to an exemplifying embodiment of the present invention. It should be noted that Fig. 3 comprises features, elements and/or functions as shown in Fig. 2 and described in the associated text. Hence, it is also referred to that figure and text for an increased understanding.

Additionally, the system 1 shown in Fig. 3 comprises a grid module 300. The shown grid module 300 is coupled to the electric grid 100. It should be noted that inventive concept is not limited by the illustration in Fig. 3. For example, there may be substantially any number of grid modules 300, which may be coupled to the electric grid 100. The grid module 300 may be configured to determine that the first load level is above the predetermined threshold. The grid module 300 may be configured to calculate the time period as a random time period. Further, the grid module 300 may be configured to determine an amount of reduction of the output power level. The grid module 300 may be configured to transmit the first message to the at least one charging device 200 (e.g. to one or more of the charging devices 200₁₋ₙ illustrated in Fig.3). Additionally, the grid module 300 may be configured to transmit the message, the time period, and/or the amount of reduction of the output power level. The grid module 300 may be configured to transmit the first message to the at least one charging device 200 via the electric grid 100.

Additionally, the system 1 shown in Fig. 3 comprises a grid module 300, wherein the grid module 300 is coupled to the electric grid 100 and the charging devices 200₁₋ₙ. Therefore, the grid module 300 may be configured to transmit the first message to the at least one charging device 200 directly and/or via the electric grid 100.

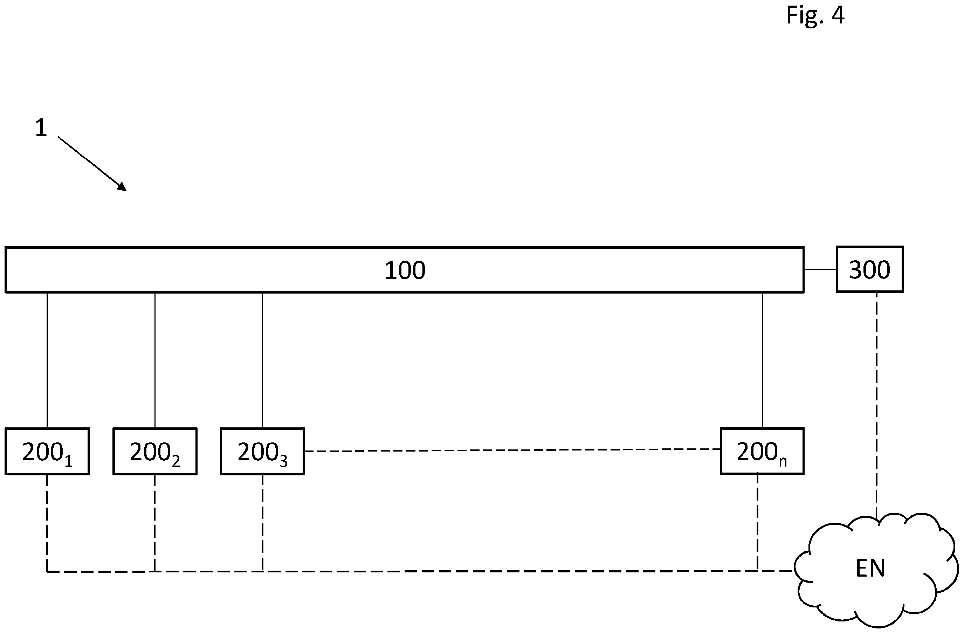

Fig. 4 schematically shows a system 1 for distribution of power according to an exemplifying embodiment of the present invention. It should be noted that Fig. 4 comprises features, elements and/or functions as shown in Figs. 2 and 3, and described in the associated text. Hence, it is also referred to those figures and texts for an increased understanding.

Additionally, the system 1 shown in Fig. 4 comprises an external network EN. The external network may comprise, but is not limited to, the internet or a cellular network. The grid module 300 and the charging devices 200₁₋ₙ in Fig. 4 are communicatively coupled to the external network EN. Therefore, communication to the charging devices 200₁₋ₙ may be done through the external network EN. Further, the grid module 300 may be configured to communicate information to a user via the external network EN. By a user, it is meant a customer using the charging device or a grid operator.

Fig. 5 schematically shows a system 1 for distribution of power according to an exemplifying embodiment of the present invention. It should be noted that Fig. 5 comprises features, elements and/or functions as shown in Figs. 2, 3 and 4, and described in the associated text. Hence, it is also referred to those figures and texts for an increased understanding.

Additionally, the system 1 shown in Fig. 5 comprises one or more grid modules 300₁₋ₙ. The shown grid modules 300₁₋ₙ are coupled between the electric grid 100 and a respective charging device 200₁₋ₙ. Further, the system 1 shown in Fig. 5 comprises one or more loads, coupled to a respective charging device 200₁₋ₙ. It should be noted that the system 1 as exemplified is not limited by the illustration in Fig. 5. Additionally, there may be one or more charging device(s) 200 coupled to the electric grid 100, which are not coupled to the electric grid 100 via a respective gird module 300, and may be directly coupled to the electric grid 100. Furthermore, there may be substantially any number of loads coupled to one or more charging device(s) 200₁₋ₙ. It should be noted that there may be a plurality of loads coupled to one charging device 200₁, 200₂, 200₃.

In a typical, non-limiting example, the electrical grid 100 distributes power provided by one or more power sources (e.g. a nuclear power plant, wind power plant or the like) to the charging devices 200₁₋ₙ. The charging devices are geographically distributed and are adapted to be coupled to one or more electrical cars for charging the batteries therein. A car starts charging its battery once the car is connected to a charging device 200₁₋ₙ. At a given time instant, e.g. in the afternoon/early evening, many car owners connect their cars to the charging devices 200₁₋ₙ (e.g. when coming home from work), wherein the load level in the grid is rapidly increased and possibly above a critical level. If the load level exceeds a power threshold somewhere in the grid 100, one or more of the grid modules 300₁₋ₙ detects the condition and sends a message down through the electrical grid 100 (or through a separate network) to one or more of the charging devices 200₁₋ₙ. Upon reception of the message the charging devices 200₁₋ₙ stop charging the car batteries for a random time period (back-off). The charging devices 200₁₋ₙ start charging the batteries concurrently with the different time periods expiring, such that the load level in the grid increasing slowly. The procedure is repeated with a doubled expected value for the random back-off time if a new critical level is reached when the charging devices 200₁₋ₙ start their respective charging cycles.

While the present invention has been illustrated in the appended drawings and the foregoing description, such illustration is to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A method (1000) for distribution of power in an electric grid (100) comprising at least one charging device (200), said method comprising:
determining (1200) that a first load level is above a predetermined threshold;
transmitting (1400) a first message to the at least one charging device, said first message indicating that said load level is above said predetermined threshold;
reducing (1600) an output power level of the at least one charging device for a time period based on said first message.

2. The method (1000) according to claim 1, wherein said time period is a random time period, said at least one charging device calculating said random time period upon receipt of said message.

3. The method (1000) according to any one of the preceding claims, wherein the output power level of the at least one charging device is reduced by an amount determined by the at least charging device.

4. The method (1000) according to any one of the preceding claims, further comprising
subsequent to determining (1200) that the first load level is above a predetermined threshold, determining (1800) that a second load level is above the predetermined threshold;
transmitting a second message to the at least one charging device, said second message indicating that said load level is above said predetermined threshold;
reducing the output power level of the at least one charging device for a time period based on said second message.

5. The method according to claim 4, wherein the reduction in output power level based on the second message is different from the reduction in output power level based on the first message.

6. The method according to claim 4 or 5, wherein the time period based on the second message is different from the time period based on the first message.

7. The method (1000) according to any of the preceding claims, wherein the at least one charging device (200) is associated with a priority value, and
wherein at least one of the reduction in output power level and the time period of the at least one charging device is based on the priority value.

8. The method (1000) according to claim 7, wherein the priority value is based on a load connected to the at least one charging device.

9. A system (1) for distribution of power comprising
an electric grid (100), comprising at least one charging device (200), and configured to determine that a first load level is above a predetermined threshold and to transmit a first message to the at least one charging device, and wherein
the at least one charging device is configured to reduce its output power level for a time period based on said first message.

10. The system (1) according to claim 9, wherein the at least one charging device (200) is further configured to calculate said time period as a random time period upon receipt of said message, and wherein said time period is said random time period.

11. The system (1) according to claim 9 or 10, wherein the at least one charging device (200) is further configured to determine an amount of reduction of the output power level.

12. The system (1) according to any of claims 9 to 11, wherein the at least one charging device (200) is associated with a priority value, and
wherein the at least one charging device (200) is further configured to determine at least one of the reduction in output power level and the time period based on the priority value.

13. The system (1) according to claim 12, wherein the priority value is based on a load connected to the charging device.

14. The system (1) according to claim any of claims 9 to 13, wherein the electric grid (100) further comprises
a grid module (300) configured to determine that the first load level is above the predetermined threshold.

15. The system (1) according to claim any of claims 9 to 14, wherein the electric grid (100) further comprises
a grid module (300) configured to transmit the first message to the at least one charging device.
